# EUROPEAN PATENT APPLICATION

(11) **EP 4 723 767 A1**
(43) Date of publication of application: **08.04.2026**
(21) Application number: 24204221.6
(22) Date of filing: 02.10.2024
(51) Int. Cl.: H04W 68/00, H04W 4/70, H04W 68/02

(54) **AMBIENT IOT TRANSACTION IDENTIFIER MANAGEMENT**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); SHARIATMADARI, Hamidreza, 63225 Langen (DE)
(74) Representative: Grünecker Patent- und Rechtsanwälte PartG mbB

(57) **Abstract**

The disclosure relates to an ambient Internet of Things (A-IoT) device, a reader device, and respective methods for an A-IoT device and a reader device. More specifically, the A-IoT device comprises a memory, a transceiver and a circuitry. The memory is suitable for storing one or more transaction identifiers, IDs. The circuitry, in operation, after performing a successful access procedure, stores a first transaction ID in the memory, wherein the access procedure includes receiving a first paging message, and the first paging message includes the first transaction ID. The transceiver, in operation, receives a second paging message, the second paging message includes a second transaction ID. The circuitry, in operation, further determines whether to omit an access procedure in response to the second paging message, wherein the determining is based on the second transaction ID, the first transaction ID stored in the memory, and an indication for the first transaction ID.

## Description

### BACKGROUND

### 1. Technical Field

The present disclosure relates to transmission and reception of in a communication system. In particular, the present disclosure relates to methods and apparatuses for such transmission and reception.

### 2. Description of the Related Art

The Internet of things (IoT) market is a major source of revenue for future wireless technology and is a steadily growing market. Building and commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal, or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with new specifically designed new operation states.

### SUMMARY

One non-limiting and exemplary embodiment facilitates management of a transaction identifier for an ambient Internet of Things, A-loT, device.

In an embodiment, the techniques disclosed here feature an apparatus (e.g. an A-loT device). The A-loT device comprises a memory, a transceiver and a circuitry. The memory is suitable for storing one or more transaction identifiers, IDs. The circuitry, in operation, after performing a successful access procedure, stores a first transaction ID in the memory, wherein the access procedure includes receiving a first paging message, and the first paging message includes the first transaction ID. The transceiver, in operation, receives a second paging message, the second paging message includes a second transaction ID. The circuitry, in operation, further determines whether to omit an access procedure in response to the second paging message, wherein the determining is based on the second transaction ID, the first transaction ID stored in the memory, and an indication for the first transaction ID.

It should be noted that general or specific embodiments may be implemented as a system, a method, an integrated circuit, a computer program, a storage medium, or any selective combination thereof. For instance, an integrated circuit can control a process of an A-loT device, a reader or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates a node-A-loT device topology;
- **Fig. 3**: illustrates another node-A-loT device topology;
- **Fig. 4**: is a flow chart showing method steps for an A-loT device for determining whether to omit an access procedure in response to a paging message;
- **Fig. 5**: is a flow chart showing method steps for indicating a paging entity to an A-loT device;
- **Fig. 6**: illustrates a scheme for determining whether to omit an access procedure in response to a paging message based on a validity timer;
- **Fig. 7**: illustrates a scheme for determining whether to omit an access procedure in response to a paging message based on a validity timer with interleaved paging;
- **Fig. 8**: illustrates a scheme for determining whether to omit an access procedure in response to a paging message in a multi-reader paging with CN originated paging requests;
- **Fig. 9**: illustrates a scheme for determining whether to omit an access procedure in response to a paging message based on in a multi-reader paging with reader originated paging requests;
- **Fig. 10**: illustrates a scheme for determining whether to omit an access procedure in response to a paging message in a multi-reader paging with reader originated paging requests based on a validity timer;
- **Fig. 11**: illustrates a scheme for determining whether to omit an access procedure in response to a paging message in a multi-reader paging with CN originated paging requests based on a validity timer;
- **Fig. 12**: is a block diagram of a communication system in accordance with exemplary embodiments of the present disclosure;
- **Fig. 13**: is a block diagram of an exemplary circuitry of an A-loT device and a block diagram of an exemplary circuitry of a reader device in accordance with exemplary embodiments of the present disclosure;
- **Fig. 14**: is a block diagram of an exemplary circuitry of a network entity in accordance with exemplary embodiments of the present disclosure;
- **Fig. 15**: shows exemplary functional split options in 5G O-RAN, to which exemplary embodiments of the present disclosure may be applied.

### DETAILED DESCRIPTION

### 5G NR system architecture and protocol stacks

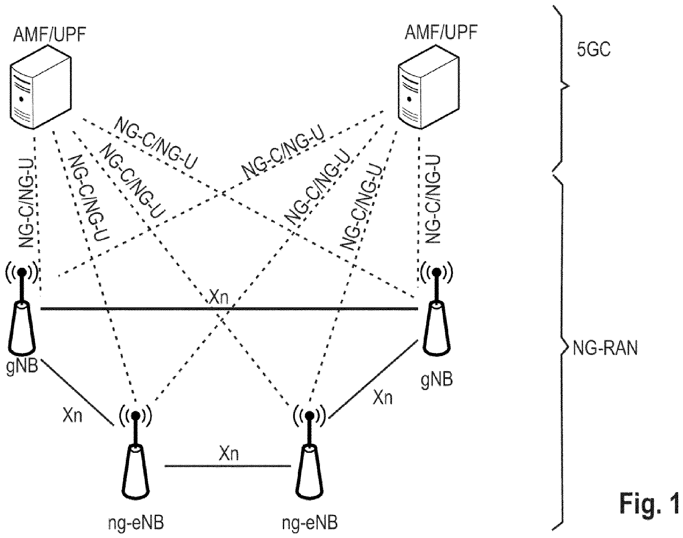

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Ambient IoT Device

An ambient loT device (A-loT device) is an energy harvesting device or terminal having a small battery or having no battery. The energy is provided through the harvesting of radio waves, light, motion, heat or any other power source that could be seen suitable. An A-loT device may be an ultra-low complexity device with ultra-low power consumption for very-low end loT applications. Examples forA-loT devices include without any limitation wearables, smart home devices, automotive devices, sensors, smart keys, healthcare devices, electronic shelf label, etc.

To reduce complexity and power consumption, A-loT devices are assumed not supporting RRC states (i.e. RRC CONNECTED, RRC IDLE, and RRC INACTIVE as in current 5G NR). Further, A-loT devices have limited power available resulting in reduced time periods of communication capability and A-loT devices are expected to be configured with new specifically designed operation states and/or protocol stacks. Thus, integration of A-loT devices into 5G and future technologies poses a demanding problem that is addressed in the present disclosure.

### Embodiments

The present disclosure addresses the integration of A-loT devices into communication networks, particularly, 5G and future technologies.

It is noted that the present disclosure is not limited to A-loT devices. It may be also applicable to other devices with possibly substantial power limitations.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, or the like (see above background discussion).

An A-loT device may communicate with a reader (reader device). A reader is an equipment that directly communicates with the A-loT device. For example, a reader may be a base station. For example, a reader may be an intermediate node (e.g. a UE, or the like).

The present disclosure relates to an A-loT device, and a reader device, and methods of communication for the A-loT device and the reader device.

### Topologies

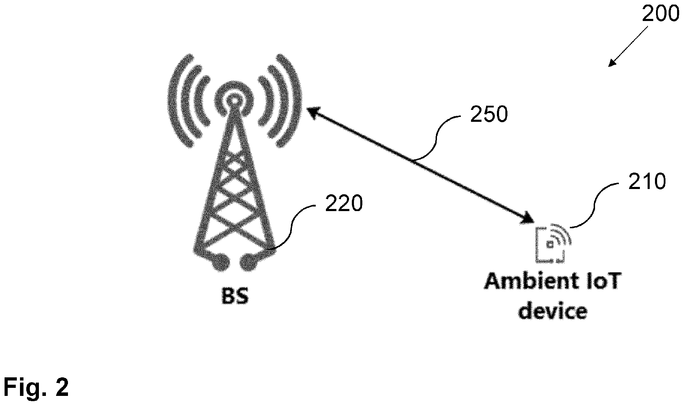

Particularly, two different topologies are exemplarily considered in this disclosure. In a first topology 200 as illustrated in **Fig. 2****,** an A-loT device 210 directly and bidirectionally communicates with a base station 220 over a wireless channel 250. The communication may include transmitting and/or receiving signals that may carry data. The data may include user data (e.g. measurements performed by the loT) and/or signaling information or signals such as control signals, reference signals or the like. The direct communication with the base station may still include communication via one or more distributed units, DU, of the base stations. A base station may operate one or more cells. In the exemplary implementation of Fig. 2, the base station functions as reader device.

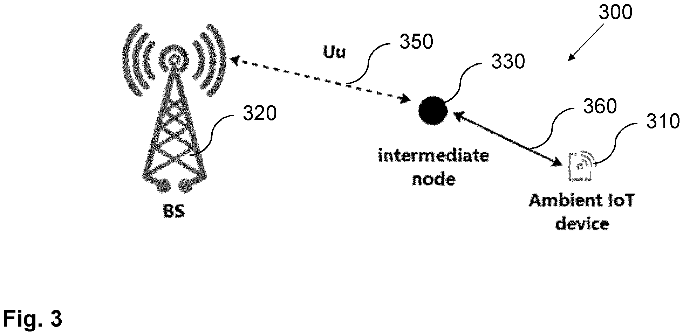

In a second topology as illustrated in **Fig. 3****,** an A-loT device 310 bidirectionally communicates with an intermediate node 330 that is located between the A-loT device 310 and the base station 320. The intermediate node 330 could be a UE, IAB, relay, or NCR. The intermediate node 330 is connected to both the base station 320 and the A-loT device 310 and transfers the user data and/ signaling between the A-loT device 210 and the base station 320. Traffics are A-loT device terminated or A-loT device originated. The BS 320 may communicate with the intermediate node 330 via a first interface 350. In Fig. 2 this is exemplified as the Uu interface (UE - gNB interface in NR). The intermediate node 330 may communicate with the A-loT device 310 via a second interface 360. The present disclosure is not limited to any specific interface definition. In general, interfaces 350 and 360 may be both wireless interfaces. In the exemplary implementation of Fig. 3, the intermediate node 330 functions as reader device.

### A-Io T transaction identifier management

In these embodiments, an ambient loT (A-loT) device obtains a transaction identifier (ID) included in a paging message. Such transaction IDs originate from a paging entity such as a reader device, a base station, a core network function entity or the like.

In general, a reader typically cannot reach all targeted devices in a coverage area by a single paging round. The reasons could be, e.g. device is not sufficiently charged yet and therefore cannot respond to the first (several) rounds of paging, or there is contention for UL resources when multiple devices try to respond and therefore some devices fail the access attempt. Thus, multiple/subsequent paging messages that are associated with the same request from the CN may be supported.

It is provided an ambient Internet of Things, A-loT, device, comprising a memory for storing one or more transaction identifiers, IDs. The A-loT device further comprises circuitry which, in operation, after performing a successful access procedure, stores a first transaction ID in the memory, wherein the access procedure includes receiving a first paging message, and the first paging message includes the first transaction ID.

A successful access procedure means that the device has completed all steps defined for an access procedure. Such an access procedure may be for example a random access (RA) procedure. The RA-procedure may be a 2-step, 3-step or 4-step RA-procedure. Such a procedure may be given by a standard, a configuration or the like.

For example, an "inventory only" case may be supported by the procedure:
- Step A: A-loT paging;
- Step B: Device ID transmission (via Random Access or without using RA).

For example, an "inventory and command" case may supported by the procedure:
- Step A: A-loT paging;
- Step B: Device ID transmission (via Random Access or without using RA).
- Step C: reader to device data transmission (e.g. the R2D command), and
- Step D (optional): corresponding device to reader data transmission (e.g. the feedback).

Such an access procedure is initiated by a paging message. The paging message may be received from a reader device, a base station, or the like. For example, an A-loT paging message may be a message including a group ID that maps to multiple A-loT devices. For example, an A-loT paging message may be a message that does not include an ID, i.e., addressed for all devices that can receive the A-loT message.

The first paging message includes a first transaction ID. Such a (paging) transaction ID may avoid duplicated response from devices. A reader provides a transaction ID in the paging message to associate it with a CN request. An A-loT device that has already responded to the paging with the same transaction ID may skip responding to other repeated paging messages.

The transaction ID may be, for example, a sequence of bits. The format of the transaction ID may be defined by a standard, a configuration or the like. For example, a first sequence of bits included in the transaction ID may identify the transaction (or paging request). For example, the transaction ID may include an indication for a reader device transmitting the paging message that includes said transaction ID. For example, the transaction ID may include an indication for a paging entity that requests the transmitting of the paging message that includes said transaction ID. For example, the paging entity may be a reader, a base station, a core network entity or the like. In other words, a paging request may originate from a reader, a base station, a core network entity or the like.

In other words, the A-loT device may receive a first paging message. Upon receiving the first paging message the A-loT device may perform the access procedure. After the success procedure is successfully performed the first transaction ID is stored in the memory.

If the access procedure fails, the A-loT device may discard the transaction ID that has triggered the access procedure.

Moreover, a transceiver, in operation, receives a second paging message. The second paging message may be received after the first paging message is received by the A-loT device. The second paging message includes a second transaction ID. The second transaction ID may identify a same or a different paging request as the first transaction ID. For example, the first and the second paging message may be part of multiple/subsequent A-loT paging messages that are associated with the same paging request. For example, the first and the second paging message may be associated with different paging requests.

The circuitry, in operation, further determines whether to omit an access procedure in response to the second paging message. The determining is based on the second transaction ID, the first transaction ID stored in the memory, and an indication for the first transaction ID.

Such an indication for the first transaction ID may provide additional information associated with the first transaction ID, stored in the memory.

For example, the indication for the first transaction ID may indicate a validity of the first transaction ID. For example, the indication for the first transaction ID may indicate an indication for a paging entity of the first transaction ID. For example, the indication for the first transaction ID may indicate a validity of the first transaction ID and an indication for a paging entity of the first transaction ID. A paging entity is a responsible entity that originates the paging request.

The paging entity may be an intermediate UE, a gNB, or a function entity in Core Network (CN).

For example, the indication for the first transaction ID may be a timer, a paging entity indication, or both, or any other suitable indication in association with the stored first transaction ID.

The term ***"transceiver"*** refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

Thus, the A-loT device receiving/transmitting a message means that the transceiver included in the A-loT device receives/transmits said message.

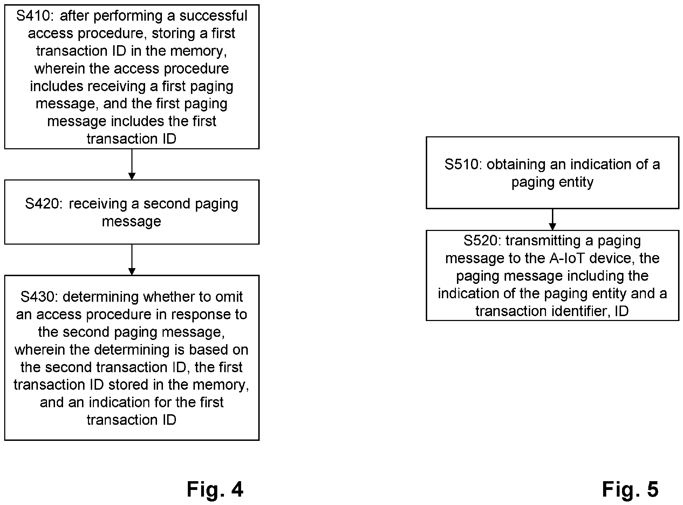

In correspondence with the above-described A-loT device, a method for determining whether to perform an access procedure is provided. As shown in **Fig. 4****,** the method comprises the steps of:
- after performing a successful access procedure, storing S410 a first transaction ID in the memory, wherein the access procedure includes receiving a first paging message, and the first paging message includes the first transaction ID;
- receiving S420 a second paging message, the second paging message includes a second transaction ID, and
- determining S430 whether to omit an access procedure in response to the second paging message, wherein the determining is based on the second transaction ID, the first transaction ID stored in the memory, and an indication for the first transaction ID.

It is noted that although embodiments and examples of the present disclosure are provided in terms of devices providing the functionality, the corresponding methods are also provided. Moreover, it is noted that any of the steps described above may be included as code instructions in a program, which may be executed by one or more processors.

As mentioned above, the indication for the first transaction ID indicates a validity of the first transaction ID and/or an indication for a paging entity of the first transaction ID. For example, the validity of the first transaction ID may be indicated by a timer. Such a timer may run in units of slots or absolute time (e.g. seconds). The timer may started based on the reception of the first paging message. For example, the A-loT device may start the timer at the end of the paging transmission or a paging slot. For example, the A-loT device may start the timer at the time-domain boundary of access occasion indicated by paging. The A-loT device may start access procedure after the timer is started. Alternatively, the A-loT device may start the timer upon the triggered access procedure is completed. A timer may be associated with a stored transaction ID. Said stored transaction ID is considered as a valid transaction ID as long as the timer is running. In other words, before the timer expires, the stored paging transaction ID is considered valid.

A timer may be reset with a preconfigured value based on the reception of a paging message, wherein the received paging message includes a transaction ID different from the first transaction ID. Alternatively, a timer may be reset with a preconfigured value based on the reception of a paging message. Similar to starting time for the first time mentioned above, the reset of timer may occur at the end of the paging transmission, a paging slot, the timer-domain boundary of access occasion indicated by paging, or upon the completion of the triggered access procedure by paging.

Such a preconfigured value may be given by a standard, may be configured by device manufacturer according to certain device category, may be configured based on a configuration received from a reader device, or the like.

For example, a timer may be reset, if a paging message is received and the received paging message includes a transaction ID different from the first transaction ID. For example, a timer may be reset with a preconfigured value each time a paging message is received.

An access procedure in response to the second paging massage may be omitted in case that one or more conditions are fulfilled. Such conditions may be given by a standard, by a configuration or the like. In other words, the determination whether to omit an access procedure in response to the second paging message may be based on the one or more conditions.

In a first exemplary implementation, in the determination whether to omit an access procedure, the access procedure in response to the second paging message is omitted, if a valid transaction ID is stored in the memory. In other words, if a timer related to a validity of a transaction ID is running, an access procedure in response to the second paging message may be skipped. If a stored transaction ID is valid, the A-loT device may not need to respond to the paging with the same transaction ID.

If there is no valid transaction ID stored in the memory, the A-loT device performs the access procedure in response to the second paging message. As mentioned above, the steps of the access procedure may be given by a standard, a configuration or the like.

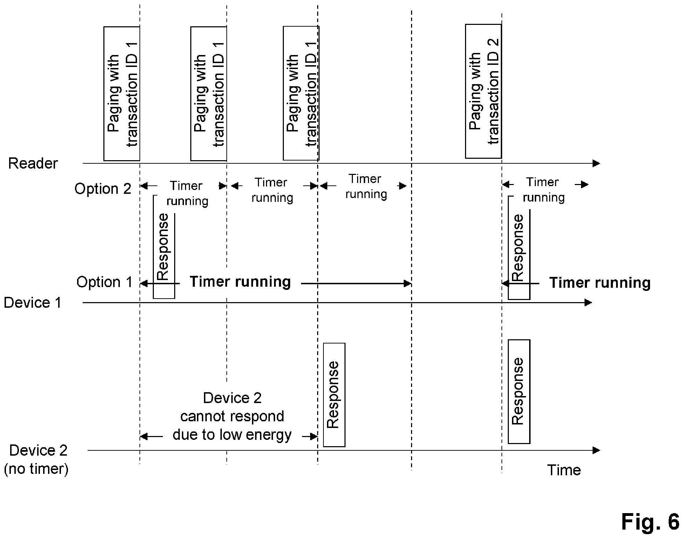

Fig. 6 illustrates an exemplary implementation of a validity timer. The reader transmits repeated paging messages that include transaction ID 1. Device 1 starts a timer at the reception of the first paging with transaction ID 1. Moreover, Device 1 responds to said paging.

Fig. 6 depicts two exemplary options for renewing the timer. In a first example (Option 1 in Fig. 6), when Device 1 receives the second and the third paging with transaction ID 1, the timer is still active, and Device 1 omits a response to these paging messages. Every time when a device receives a paging with a new transaction ID, timer may be reset with a pre-configured value. In a second example (Option 2 in Fig. 6), every time when device receives a paging, regardless of a same or different transaction ID, timer may be reset with pre-configured value. If typical number of paging repetitions is fixed, the first example may be used; otherwise, the second example be used for more flexibility.

A response to a paging message is to be understood as to perform the subsequent steps of an access procedure. Examples for implementations of access procedures have been given above.

In Fig. 6, Device 1 starts the timer at the end of paging transmission. The timer value has been configured to be able to accommodate another two repeated paging transmissions (for option 1). Therefore, Device 1 skips responding to the repeated paging with the same transaction ID as the stored one (ID=1). The reader may adjust the period for paging repetition according to the timer to avoid receiving unnecessary responses.

As can be seen from Fig. 6, when Device 1 receives a paging message having transaction ID 2, which is different from transaction ID 1, Device 1 responds to said paging message because there is no longer a valid transaction ID stored in the memory. In the example of Fig. 6 the timer associated with transaction ID 1 has expired at the time when the paging with transaction ID 2 is received.

Moreover, Fig. 6 illustrates the behavior of Device 2, which cannot respond to the first and second paging with transaction ID 1 due to low energy. Device 2 responds to the third paging with transaction ID 1. When Device 2 receives the paging message having transaction ID 2, which is different from transaction ID 1, Device 2 also responds to said paging message due to the different transaction ID. Both, Device 1 and Device 2 in Fig. 6 may be A-loT devices.

In a second exemplary implementation, in addition to the first exemplary implementation, the validity timer is per transaction ID, meaning that a paging with new transaction ID may disregard the timer.

In other words, if the first transaction ID is a valid transaction ID, and if the second transaction ID corresponds to the first transaction ID, the circuitry, in operation, omits performing the access procedure in response to the second paging message.

A second transaction ID corresponds to the first transaction ID, if at least a part of the respective transaction ID related to a same paging transaction request. For example, a bit pattern included in the respective transaction IDs may be identical, if said transaction IDs correspond to each other. In general, a transaction ID may include indications in addition to the part that indicates the paging transaction request. Said additional indications may not be identical even if said transaction IDs indicate a same paging transaction request. The additional indications may indicate, for example, a transmitting reader device, a responsible paging entity or the like.

If there is no valid transaction ID stored in the memory, the A-loT device performs the access procedure in response to the second paging message. In addition or alternatively, if the second transaction ID does not correspond to the first transaction ID, the A-loT device performs the access procedure in response to the second paging message. As mentioned above, the steps of the access procedure may be given by a standard, a configuration or the like.

The A-loT device in the second exemplary implementation may respond to a paging with a new transaction ID although the timer for the stored transaction ID is not expired. Whether the A-loT device responds may be subject to other (additional) conditions, such as if the A-loT device has sufficient energy.

The timer in the second exemplary implementation may be reset based on reception of a paging, according to either Option 1 or 2 as explained above for the first exemplary implementation. The A-loT device may start an access procedure triggered by the paging message including the new transaction ID. After the A-loT device successfully completes access procedure, device replaces the stored transaction ID with the new one.

In the second exemplary implementation, the A-loT device may not miss some urgent service request even if the timer (for the transaction that device has already responded before) is still running.

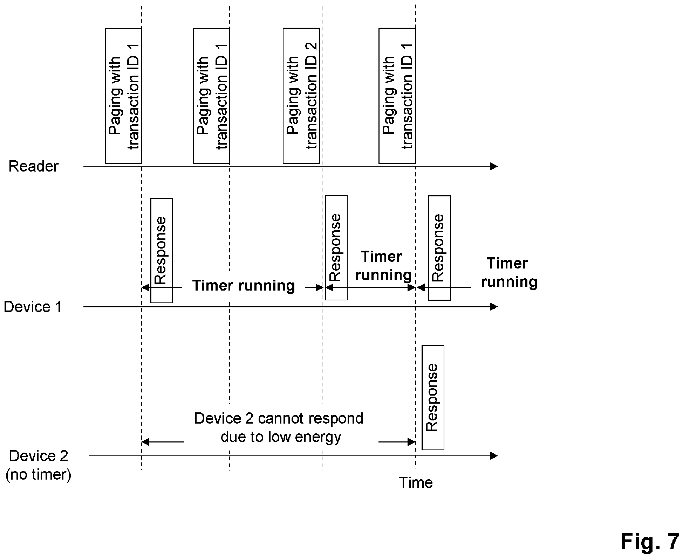

Fig. 7 exemplary illustrates an implementation for the second exemplary implementation of a validity timer with interleaved paging. The reader transmits a repeated paging messages that include transaction ID 1. Device 1 starts a timer at the reception of the first paging with transaction ID 1. Moreover, Device 1 responds to said paging. A response to a paging message is to be understood as to perform the subsequent steps of an access procedure.

In Fig. 7, Device 1 starts the timer at the end of paging transmission. The timer for transaction ID 1 is still running (i.e. transaction ID 1 is valid), when the paging with transaction ID 2 is received. As transaction ID2 does not correspond to transaction ID 1, e.g. is different from transaction ID 1, Device 1 starts a timer for transaction ID 2. Moreover, Device 1 responds to the paging with transaction ID 2.

In other words, the timer is reset after receiving a paging having a different transaction ID, according to either Option 1 or 2 (see previous slide). The A-loT device may start the access procedure triggered by the new transaction.

As can be seen from Fig. 7, when Device 1 receives a paging message having transaction ID 1, and the timer for transaction ID 2 is still running, Device 1 starts a timer for transaction ID 1. Moreover, Device 1 responds to the new paging with transaction ID 1.

Moreover, Fig. 7 illustrates the behavior of Device 2, which cannot respond to the first and second paging with transaction ID 1 as well as to the first paging with transaction ID 2 due to low energy. Device 2 responds to the third paging with transaction ID 1. Both, Device 1 and Device 2 in Fig. 7 may be A-loT devices.

As mentioned above, the indication for the first transaction ID may indicate a paging entity of the first transaction ID. A paging entity is a responsible entity that originates the paging request. The paging entity may be an intermediate UE, a gNB, or a function entity in Core Network (CN).

In particular, the circuitry may obtain an indication for a paging entity of the first transaction ID based on the first paging message. In the storing of the first transaction ID, the circuitry, may further store the indication for a paging entity of the first transaction ID.

In a third exemplary implementation for the determination whether to omit an access procedure, the A-loT device may omit performing the access procedure in response to the second paging message,
- if the second transaction ID corresponds to the first transaction ID, and
- if the first transaction ID and the second transaction ID originate from a same paging entity in a core network (CN).

With the stored transaction ID (and responsible entity), the A-loT device is able to skip the repeated pagings with the same transaction ID, regardless of sending readers.

In particular, the first paging message and the second paging message may be transmitted by a same reader device or by different reader devices. An A-loT device may receive paging messages from more than one reader device, if the A-loT device is located in an overlapping coverage region of at least two reader devices.

The responsible paging entity (e.g. a CN entity) may be known to the device, for example, by explicit signaling of an entity ID in the paging. The responsible paging entity (e.g. a CN entity) may be known to the device, for example, by implicit signaling, e.g. a part of the transaction ID may represent a responsible CN entity. In some case it may sufficient to know that a paging is originated from CN without knowing the specific CN entity. Then, for example, one or two bits in the paging message may be used to indicate whether the paging message is originated from a CN function entity, a gNB, or an UE intermediate node (e.g. reader device).

In general, the entity that originates the paging request may be an intermediate UE, a gNB, or a function entity in Core Network (CN).

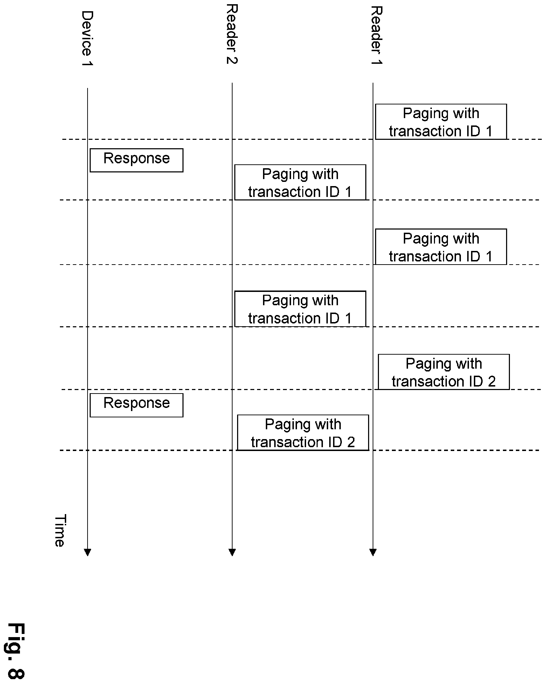

**Fig. 8** exemplarily illustrates the third exemplary implementation in a multi-reader paging with CN originated paging requests. In particular, each of Reader 1 and Reader 2 transmits a first and a second paging with transaction ID 1, followed by a third paging with transaction ID 2. An A-loT device (Device 1) responds to the first paging with transaction ID 1 of Reader 1. Transaction ID 1, transmitted to Device 1 via Reader 1 or Reader 2, originated from a same paging entity in the core network. Subsequently, Device 1 responds to the first paging with transaction ID 2. In Fig. 8, Device 1 responds to the paging with transaction ID 2 transmitted by Reader 1, which is earlier in time than the paging with transaction ID 2 transmitted by Reader 2.

In a fourth exemplary implementation, an indication for a responsible reader is stored together with the transaction ID obtained from a paging message transmitted by said responsible reader. In other words, in the storing of the first transaction ID, A-loT device further stores an indication for a paging reader device of the first transaction ID. After the A-loT device has successfully completed the access procedure in response to a paging from a reader, it may store the transaction ID in the memory together with the responsible reader.

In the fourth exemplary implementation, it may be determined to omit performing the access procedure in response to the second paging message,
- if the paging reader device of the second transaction ID corresponds to the paging reader device of the first transaction ID, and
- if the second transaction ID corresponds to the first transaction ID.

Moreover, if the paging reader device of the second transaction ID does not corresponds to the paging reader device of the first transaction ID, the A-loT device may perform the access procedure in response to the second paging message.

The responsible reader may be known to the A-loT device, for example, by explicit signaling a reader ID in the paging. The responsible reader may be known to the A-loT device, for example, by implicit signaling, e.g. part of the transaction ID represents a responsible reader. In some case it may sufficient to know that a paging is from gNB reader without need to distinguish different gNB readers. Then, for example, one or two bits in paging may be used to indicate whether the paging originates from a CN function entity, a gNB, or an UE intermediate node.

In general, in the storing of the transaction ID, the A-loT device may store an indication for a CN entity that is responsible for the paging and/or an indication for a reader that transmitted the paging message.

With the stored transaction ID (and responsible entity), the A-loT device is able to skip the repeated pagings from the same reader, but device needs to respond to paging from a different reader, or new paging from the same reader. When multiple readers receive responses from the same device, device location may be more precisely known to be the overlapping area of these readers.

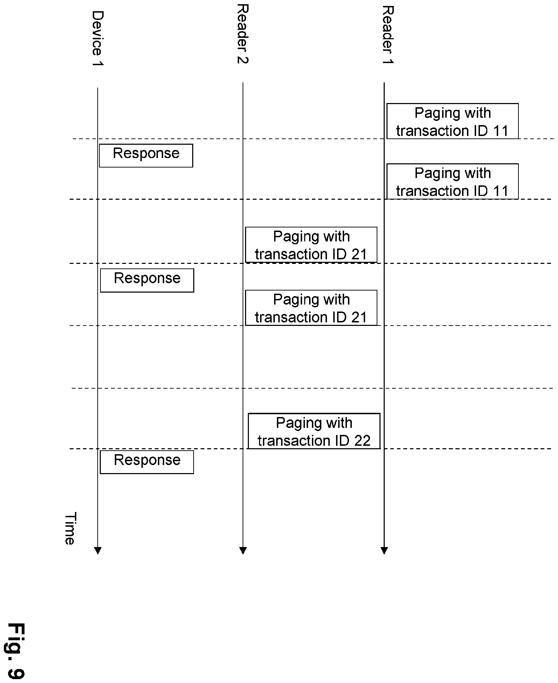

Fig. 9 exemplarily illustrates multi-reader paging with reader originated paging as an example for the fourth exemplary implementation. In the example of Fig. 9, the paging transaction IDs are given by a two digit number, for example, the first number indicates the reader that originates the paging, and the second number provides the indication for the transaction. In the example of Fig. 9, an A-loT device (Device 1) omits a response if it receives a paging having the same indication for the reader device as well as the same indication for the transaction. Thus, Device 1 does not respond to the second paging with transaction ID 11. Moreover, Device 1 does not respond to the second paging with transaction ID 21. However, Device 1 responds to each of the first pagings having transaction ID 11, 21, or 22, respectively. A response to a paging message is to be understood as to perform the subsequent steps of an access procedure.

In a fifth exemplary implementation, a validity of the first transaction ID and an indication for a paging entity of the first transaction ID are taken into account. The A-loT device may further store an indication for a paging reader device of the first transaction ID, when storing the first transaction ID. Such a storing of an indication for a paging reader device may be performed in addition to the timer as, for example, described above in any of the first and second exemplary implementations.

In other words, as long as a valid transaction ID that has been received from a first reader device is stored in the A-loT device, a response to a paging message from any other reader device is omitted. A frequent change of reader-device association may be avoid due to the timer.

Moreover in a sixth exemplary implementation, which is based on the fifth exemplary implementation, the A-loT device responds to a new transaction ID from the first reader device, while there is a valid transaction ID stored. In other words, if the paging reader device of the second transaction ID corresponds to the paging reader device of the first transaction ID, if the first transaction ID is a valid transaction ID, and if the second transaction ID corresponds to the first transaction ID, A-loT device omits performing the access procedure in response to the second paging message.

If a stored transaction ID is invalid (i.e. timer expired), any transaction ID from any responsible entity may update the stored transaction ID.

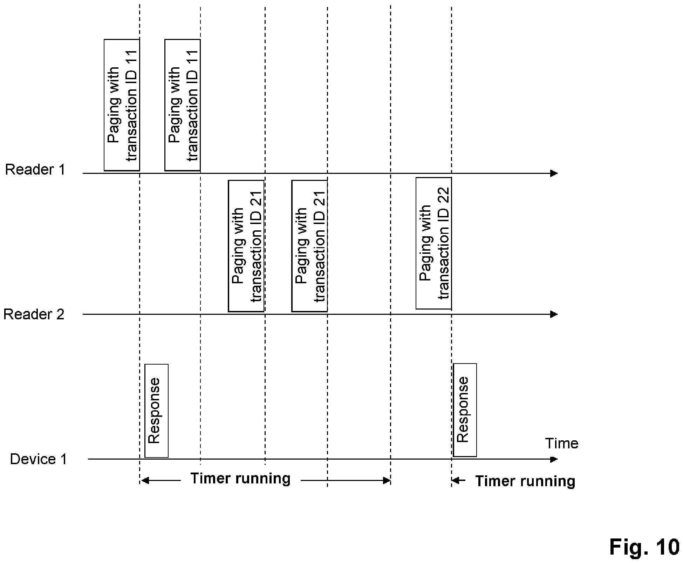

**Fig. 10** exemplarily illustrates an implementation in which the stored transaction ID is associated with both a timer and responsible entity. If a stored transaction ID is valid, only a new transaction ID from the same responsible entity may update the stored transaction ID (i.e. replace the old one with the new one). The A-loT device may only respond to any new transaction from the same responsible entity if the stored transaction ID is valid.

The example of Fig. 10 assumes that transaction ID is originated from the reader device. After the A-loT device (Device 1) receives paging first from reader 1, Device 1 starts a new timer and responds to this first paging. Assuming access procedure is completed, device 1 stores transaction ID 11 and indication for reader 1 in the memory. When timer is running, device 1 receives three pagings (11 from reader 1, 21, and 21 from reader 2). Device 1 may skip responding because device 1 only may respond new paging from reader 1 when the timer is running. After the timer expires, device 1 receives paging (ID 22) from reader 2. Device 1 starts a new timer and responds to the paging.

For a timer renewing rule there may be two options:
- Option 1: based on reception of a paging with a new transaction ID from the same responsible entity, the timer is re-set (e.g. used in the example of Fig. 10)
- Option 2: based on reception of a paging, regardless of same or different transaction ID or responsible entity, timer is re-set.

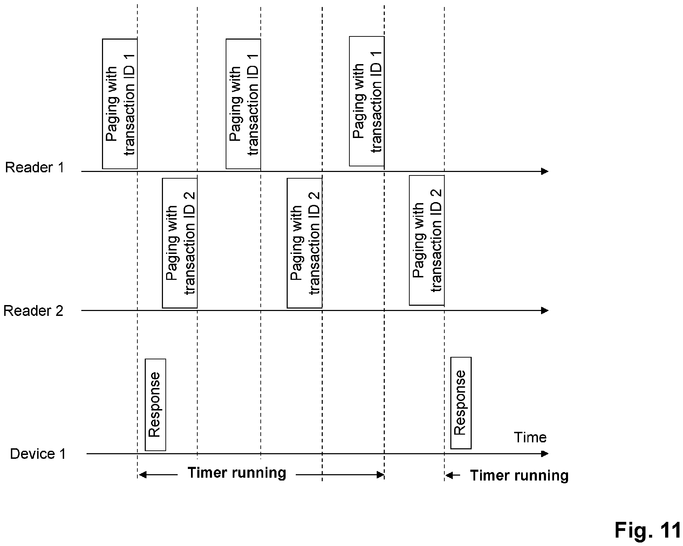

**Fig. 11** exemplarily illustrates an implementation in which the stored transaction ID is associated with both a timer and responsible entity. If a stored transaction ID is valid, only a new transaction ID from the same responsible entity may update the stored transaction ID (i.e. replace the old one with the new one). The A-loT device may only respond to any new transaction from the same responsible entity if the stored transaction ID is valid.

The example of Fig. 11 assumes that transaction ID is originated from a CN entity. Paging is sent from both reader devices 1 and 2. Although reader 1 and reader 2 are sending paging originated from different requests, assuming no coordination between readers in time and/or frequency domains, the A-loT device may end up with interleaved paging messages that are received if the A-loT device is located in an overlapping area of both readers. Without a timer, device needs to respond to readers 1 and 2 alternatively (because every paging becomes a new paging from a previous one that device has just responded), creating unnecessary duplication.

The example of Fig. 11 defines that device only needs to respond to new transaction from the same reader if timer is running (i.e. the stored transaction ID is valid). Thus, as long as the timer is running, the A-loT device (Device 1) does not respond to a paging form a different reader, or a paging from a same reader if the transaction ID corresponds to the stored transaction ID.

If a stored transaction ID is valid, only a new transaction ID from the same reader may update the stored transaction ID, meaning that device only needs to respond to new transaction from the same reader

As mentioned above, an access procedure in response to the second paging massage may be omitted in case one or more conditions are fulfilled. A set including one or more conditions may be given by a standard, by a configuration or the like. Such a configuration may be received from a reader device, a gNB or a core network function entity.

For example, the set of one or more conditions may include any condition or any suitable combination of conditions out of:
- the stored transaction ID is a valid transaction ID,
- the second transaction ID corresponds to the first transaction ID,
- the paging reader device of the second transaction ID does not correspond to the paging reader device of the first transaction ID,
- the paging reader device of the second transaction ID corresponds to the paging reader device of the first transaction ID,
- the first transaction ID and the second transaction ID originate from a same paging entity in a core network,
- the paging reader device of the second transaction ID corresponds to the paging reader device of the first transaction ID.

An access procedure in response to the second paging massage may be omitted in case each condition out of the set of conditions is fulfilled. However, in case at least one of the condition out of set of conditions is not fulfilled, the A-loT device may perform the access procedure in response to the second paging message.

After performing a successful access procedure in response to the second paging message, the A-loT device may store the second transaction ID in the memory. Such a storing of the second transaction ID may be performed in addition to any of the first to sixth exemplary implementations.

In addition to any of the first to sixth exemplary implementations, the memory may store one transaction ID. In this case, the storing of the second transaction ID may replace the first transaction ID stored in the memory.

In case the memory may store two or more transaction IDs, the storing of the second transaction ID may replace a transaction ID, which is the longest time stored among the two or more transaction IDs stored in the memory. In case the memory may store two or more transaction IDs, each stored transaction ID may be associated with a timer and/or a responsible entity. If the A-loT device has successfully completed an access procedure triggered by a paging with a new transaction ID, the A-loT device may replace the oldest stored transaction ID (or longest time in memory).

A reader device may transmit any of the above-mentioned paging messages. For example, the reader device may be instructed by a gNB, a CN function entity or any other suitable entity to perform a paging. For example, the reader may initiate a reader originated paging. In other words, the reader (device) provided herein may (at least) perform the steps of receiving and/or transmitting of messages from or to the A-loT device as explained in detail above.

In particular, it is provided a reader device, comprising circuitry which, in operation obtains an indication of a paging entity; and a transceiver which, in operation, transmits a paging message to the A-loT device, the paging message including the indication of the paging entity and a transaction identifier, ID.

Such an indication may indicate a responsible CN function entity, a responsible base station (gNB), a responsible reader device, or any other suitable device, from which a paging request may originate.

The reader may receive a message from a base station (BS) and/or a core network (CN) function entity, wherein the message includes a paging request and/or an indication for the responsible entity.

Moreover, a reader device may obtain an indication for a duration of a validity timer of the A-loT device. The reader device may adapts a number and/or a frequency of repetitions of paging messages including a same transaction ID. Such an adaption may be performed based on the duration of a validity timer. Such an adaption may be performed independent from or in addition to the obtaining and transmitting of the indication of the paging entity.

The reader may adjust the period for paging repetition according to the timer to avoid receiving unnecessary responses

In other words, the reader may adjust the time duration for multiple/subsequent paging to match the A-loT device's validity timer, if the timer value is known to the reader in some way (e.g. report it from device to reader, or the timer value is specified by standards).

For example, the obtaining an indication for a duration of a validity timer may include receiving the indication from the A-loT device. For example, the obtaining an indication for a duration of a validity timer may include obtaining the indication from a standard.

In correspondence with the above-described reader device, a method for a reader device for providing an indication of a paging for the A-loT device is provided. As shown in **Fig. 5****,** the method comprises the steps of:
- obtaining S510 an indication of a paging;
- transmitting S520 a paging message to the A-loT device, the paging message including the indication of the paging entity and a transaction identifier, ID.

### Further implementations

As mentioned above, some A-loT devices have a limited energy capacity. The energy could be obtained from the environment (vibration, light, heat) or a carrier wave, e.g., provided by the gNB/intermediate node. The A-loT device may not have the legacy RRC states, ARQ, and HARQ. It may implement, e.g. repetitions to increase robustness.

The A-loT device has a limited power energy; hence it may not be able to communicate at any time instance, with the desired transmission power, and with maximum allowed message size. In addition, the A-loT device may be defined/configured with various states, such as, power OFF, charging, communication, and sleep. The A-loT device may not be able to communicate in all these states. To facilitate the communication considering the mentioned limitations, the A-loT may signal relevant information for the subsequent data transmission(s) -uplink and/or downlink.

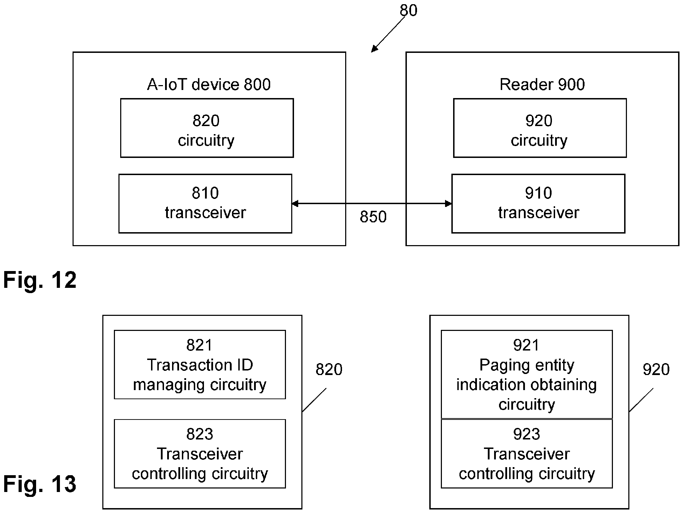

**Fig. 12** illustrates a general, simplified and exemplary block diagram of an A-loT device 800 and a reader (user equipment, base station or intermediate node connected to a base station) 900 forming a communication system 80. The A-loT device 800 may be a wearable, smart home device, automotive device, sensor, smart key, or healthcare device, for example.

The A-loT device 800 and the reader 900 (eNB/gNB) are communicating with each other over a (wireless) physical channel 850, respectively, using their transceivers 810 (A-loT side) and 910 (reader side). The reader 900 and the A-loT device 800 are capable of transmitting as well as receiving radio signals via the channel 850. Together, the reader 900 and the A-loT device 800 form a communication system 80, for example, a 5G or future communication system. The communication system 80 may further include other entities such as further readers, base stations, intermediate nodes and/or A-loT devices. Any of the above-described embodiments may be implemented in the A-loT device 800, the reader 900 and/or communication system 80 where appropriate.

The A-loT device 800 comprises a transceiver 810 and a (processing) circuitry 820, and the reader 900 comprises a transceiver 910 and a (processing) circuitry 920. The transceiver 810, 910 in turn comprise and/or function as a receiver and/or a transmitter.

In this disclosure, in other words, the term "transceiver" is used for hardware and/or software components that allow the A-loT device 800, and the reader 900 to transmit and/or receive radio signals over the wireless channel 850, for example, a physical channel. Moreover, the term "circuitry" includes processing circuitry formed by one or more processors or processing units, etc.

In some embodiments, the transceiver 810 of the A-loT device 800 receives a paging message; and determines whether to perform an access procedure.

In some embodiments, the transceiver 910 of the reader 900 transmits a paging message to the A-loT device 800, wherein the paging message may include an indication for a paging entity.

The circuitry may be configured by software to perform the functions as described in any of the above embodiments. As shown in **Fig. 13****,** the circuitry 820 of the A-loT device may further comprise a functional module referred to as transaction ID managing circuitry 821 for storing transaction IDs and related information, as well as determining whether to perform an access procedure. A transceiver controlling circuitry 823 is a functional module that controls the transceiver to receive a paging message and/or to perform an access procedure. Moreover, as shown in Fig. 13, the circuitry 920 of the reader may further comprise a functional module referred to as paging entity indication obtaining circuitry 921 for obtaining and/or generating the paging entity indication. A transceiver controlling circuitry 923 is a functional module that controls the transceiver to transmit the paging message and/or performing an access procedure.

Moreover, it is noted that the A-loT device as described in any of the above embodiments and examples, may be integrated on an integrated circuit (IS). Moreover, the integration does not necessary include the entire transceiver. The transceiver is, in general, not necessarily a part of the A-loT device. The A-loT may be connected to an external antenna (module) connected to the A-loT over a port on the A-loT device. Similar structure applies to the gNB.

Moreover, a computer program is provided including code instructions stored on a non-transitory medium, which when executed on one or more processor, causes the one or more processors to execute a method according to any of the above mentioned embodiments and examples.

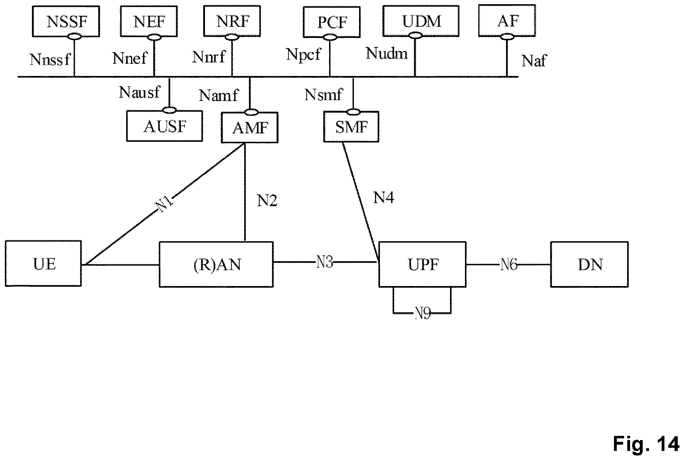

**Fig. 14** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 14 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

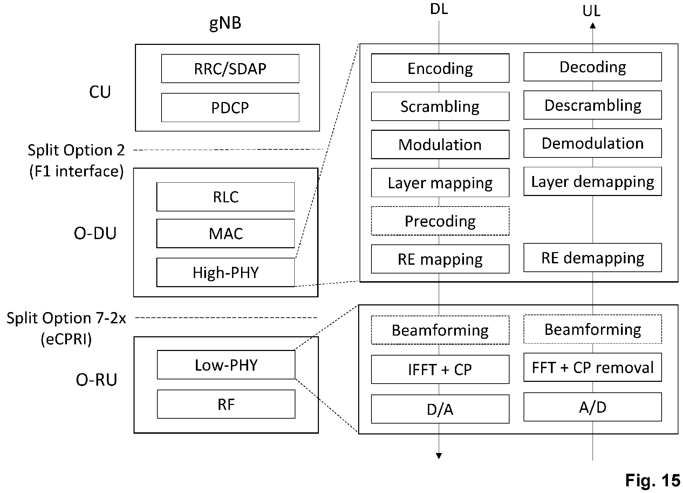

**Fig. 15** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result. CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (Subband non-overlapping full duplex - SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD - Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (User Equipment)

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

Summarizing, the disclosure relates to an ambient Internet of Things (A-loT) device, a reader device, and respective methods for an A-loT device and a reader device. More specifically, the A-loT device comprises a memory, a transceiver and a circuitry. The memory is suitable for storing one or more transaction identifiers, IDs. The circuitry, in operation, after performing a successful access procedure, stores a first transaction ID in the memory, wherein the access procedure includes receiving a first paging message, and the first paging message includes the first transaction ID. The transceiver, in operation, receives a second paging message, the second paging message includes a second transaction ID. The circuitry, in operation, further determines whether to omit an access procedure in response to the second paging message, wherein the determining is based on the second transaction ID, the first transaction ID stored in the memory, and an indication for the first transaction ID.

Aspect 1: An ambient Internet of Things, A-loT, device, comprising: a memory for storing one or more transaction identifiers, IDs; circuitry, which in operation: after performing a successful access procedure, stores a first transaction ID in the memory, wherein the access procedure includes receiving a first paging message, and the first paging message includes the first transaction ID; a transceiver, which in operation: receives a second paging message, the second paging message includes a second transaction ID; the circuitry, which in operation, further: determines whether to omit an access procedure in response to the second paging message, wherein the determining is based on the second transaction ID, the first transaction ID stored in the memory, and an indication for the first transaction ID.

Aspect 2: The A-loT device according to aspect 1, wherein the indication for the first transaction ID indicates a validity of the first transaction ID and/or an indication for a paging entity of the first transaction ID.

Aspect 3: The A-loT device according to aspect 2, wherein the validity of the first transaction ID is indicated by a timer, and the timer is started based on the reception of the first paging message.

Aspect 4: The A-loT device according to any of the aspects 2 to 3, wherein in the determination, if a valid transaction ID is stored in the memory, the circuitry, in operation, omits performing the access procedure in response to the second paging message.

Aspect 5: The A-loT device according to any of the aspects 2 to 3 wherein in the determination, if the first transaction ID is a valid transaction ID, and if the second transaction ID corresponds to the first transaction ID, the circuitry, in operation, omits performing the access procedure in response to the second paging message.

Aspect 6: The A-loT device according to aspect 3, wherein in the storing of the first transaction ID, the circuitry, in operation, further stores an indication for a paging reader device of the first transaction ID; and in the determination, if the paging reader device of the second transaction ID does not correspond to the paging reader device of the first transaction ID, and if the first transaction ID is a valid transaction ID, the circuitry, in operation, omits performing the access procedure in response to the second paging message.

Aspect 7: The A-loT device according to aspect 6, wherein in the determination, if the paging reader device of the second transaction ID corresponds to the paging reader device of the first transaction ID, if the first transaction ID is a valid transaction ID, and if the second transaction ID corresponds to the first transaction ID, the circuitry, in operation, omits performing the access procedure in response to the second paging message.

Aspect 8: The A-loT device according to any of the aspects 3 to 7, wherein the timer is reset with a preconfigured value based on the reception of a paging message, wherein the received paging message includes a transaction ID different from the first transaction ID; or based on the reception of a paging message.

Aspect 9: The A-loT device according to any of the aspects 2 to 8, wherein in the determination, if there is no valid transaction ID stored in the memory, the circuitry, in operation, performs the access procedure in response to the second paging message.

Aspect 10: The A-loT device according to aspect 2, wherein the circuitry, in operation, further obtains an indication for a paging entity of the first transaction ID based on the first paging message; and wherein in the storing of the first transaction ID, the circuitry, in operation, further stores the indication for a paging entity of the first transaction ID; and in the determination, if the second transaction ID corresponds to the first transaction ID and if the first transaction ID and the second transaction ID originate from a same paging entity in a core network, CN, the circuitry, in operation, omits performing the access procedure in response to the second paging message.

Aspect 11: The A-loT device according to aspect 2, wherein in the storing of the first transaction ID, the circuitry, in operation, further stores an indication for a paging reader device of the first transaction ID; and wherein in the determination, if the paging reader device of the second transaction ID corresponds to the paging reader device of the first transaction ID and if the second transaction ID corresponds to the first transaction ID, the circuitry, in operation, omits performing the access procedure in response to the second paging message; and if the paging reader device of the second transaction ID does not correspond to the paging reader device of the first transaction ID, the circuitry, in operation, performs the access procedure in response to the second paging message.

Aspect 12: The A-loT device according to any of the aspects 1 to 10, wherein, after performing a successful access procedure in response to the second paging message, stores the second transaction ID in the memory.

Aspect 13: The A-loT device according to any of the aspects 1 to 12, wherein in case the memory stores one transaction ID, the storing of the second transaction ID replaces the first transaction ID stored in the memory; and in case the memory stores two or more transaction IDs, the storing of the second transaction ID replaces a transaction ID, which is the longest time stored among the two or more transaction IDs stored in the memory.

Aspect 14: A reader device for an ambient Internet of Things, A-loT, device, comprising: circuitry, which in operation: obtains an indication of a paging entity; a transceiver, which in operation: transmits a paging message to the A-loT device, the paging message including the indication of the paging entity and a transaction identifier, ID.

Aspect 15: The reader device according to aspect 14, wherein the circuitry, in operation, further obtains an indication for a duration of a validity timer of the A-loT device; and adapts a number and/or a frequency of repetitions of paging messages including a same transaction ID.

Aspect 16: A method for determining whether to perform an access procedure, the method comprising: after performing a successful access procedure, storing a first transaction ID in the memory, wherein the access procedure includes receiving a first paging message, and the first paging message includes the first transaction ID; receiving a second paging message, the second paging message includes a second transaction ID, and determining whether to omit an access procedure in response to the second paging message, wherein the determining is based on the second transaction ID, the first transaction ID stored in the memory, and an indication for the first transaction ID.

Aspect 17: A method for a reader device for providing an indication of a paging for the A-loT device, the method comprising: obtaining an indication of a paging; transmitting a paging message to the A-loT device, the paging message including the indication of the paging entity and a transaction identifier, ID.

Aspect 18: An integrated circuit, which in operation, controls a process of an A-loT device, the process comprising the following steps performed by the A-loT device: after performing a successful access procedure, storing a first transaction ID in the memory, wherein the access procedure includes receiving a first paging message, and the first paging message includes the first transaction ID; receiving a second paging message, the second paging message includes a second transaction ID, and determining whether to omit an access procedure in response to the second paging message, wherein the determining is based on the second transaction ID, the first transaction ID stored in the memory, and an indication for the first transaction ID.

Aspect 19: An integrated circuit, which in operation, controls a process of a reader device, the process comprising the following steps performed by the reader device: obtaining an indication of a paging; transmitting a paging message to the A-loT device, the paging message including the indication of the paging entity and a transaction identifier, ID.

Aspect 20: A program stored on a storage medium and including code instructions, which, when executed on one or more processors of an A-loT device, cause the one or more processors to execute the following steps: after performing a successful access procedure, storing a first transaction ID in the memory, wherein the access procedure includes receiving a first paging message, and the first paging message includes the first transaction ID; receiving a second paging message, the second paging message includes a second transaction ID, and determining whether to omit an access procedure in response to the second paging message, wherein the determining is based on the second transaction ID, the first transaction ID stored in the memory, and an indication for the first transaction ID.

Aspect 21: A program stored on a storage medium and including code instructions, which, when executed on one or more processors of a reader device, cause the one or more processors to execute the following steps: obtaining an indication of a paging; transmitting a paging message to the A-loT device, the paging message including the indication of the paging entity and a transaction identifier, ID.

## Claims

1. An ambient Internet of Things, A-loT, device, comprising:
a memory for storing one or more transaction identifiers, IDs;
circuitry, which in operation:
after performing a successful access procedure, stores a first transaction ID in the memory, wherein the access procedure includes receiving a first paging message, and the first paging message includes the first transaction ID;
a transceiver, which in operation:
receives a second paging message, the second paging message includes a second transaction ID;
the circuitry, which in operation, further:
determines whether to omit an access procedure in response to the second paging message,
wherein the determining is based on the second transaction ID, the first transaction ID stored in the memory, and an indication for the first transaction ID.

2. The A-loT device according to claim 1, wherein the indication for the first transaction ID indicates a validity of the first transaction ID and/or an indication for a paging entity of the first transaction ID.

3. The A-loT device according to claim 2, wherein the validity of the first transaction ID is indicated by a timer, and the timer is started based on the reception of the first paging message.

4. The A-loT device according to any of the claims 2 to 3, wherein in the determination, if a valid transaction ID is stored in the memory, the circuitry, in operation, omits performing the access procedure in response to the second paging message.

5. The A-loT device according to any of the claims 2 to 3 wherein in the determination, if the first transaction ID is a valid transaction ID, and if the second transaction ID corresponds to the first transaction ID, the circuitry, in operation, omits performing the access procedure in response to the second paging message.

6. The A-loT device according to claim 3, wherein in the storing of the first transaction ID, the circuitry, in operation, further stores an indication for a paging reader device of the first transaction ID; and
in the determination, if the paging reader device of the second transaction ID does not correspond to the paging reader device of the first transaction ID, and if the first transaction ID is a valid transaction ID, the circuitry, in operation, omits performing the access procedure in response to the second paging message.

7. The A-loT device according to claim 6, wherein in the determination, if the paging reader device of the second transaction ID corresponds to the paging reader device of the first transaction ID, if the first transaction ID is a valid transaction ID, and if the second transaction ID corresponds to the first transaction ID, the circuitry, in operation, omits performing the access procedure in response to the second paging message.

8. The A-loT device according to any of the claims 3 to 7, wherein the timer is reset with a preconfigured value
- based on the reception of a paging message, wherein the received paging message includes a transaction ID different from the first transaction ID; or
- based on the reception of a paging message.

9. The A-loT device according to any of the claims 2 to 8, wherein in the determination, if there is no valid transaction ID stored in the memory, the circuitry, in operation, performs the access procedure in response to the second paging message.

10. The A-loT device according to claim 2, wherein the circuitry, in operation, further obtains an indication for a paging entity of the first transaction ID based on the first paging message; and
wherein in the storing of the first transaction ID, the circuitry, in operation, further stores the indication for a paging entity of the first transaction ID; and
in the determination, if the second transaction ID corresponds to the first transaction ID and if the first transaction ID and the second transaction ID originate from a same paging entity in a core network, CN, the circuitry, in operation, omits performing the access procedure in response to the second paging message.

11. The A-loT device according to claim 2, wherein in the storing of the first transaction ID, the circuitry, in operation, further stores an indication for a paging reader device of the first transaction ID; and
wherein in the determination, if the paging reader device of the second transaction ID corresponds to the paging reader device of the first transaction ID and if the second transaction ID corresponds to the first transaction ID, the circuitry, in operation, omits performing the access procedure in response to the second paging message; and
if the paging reader device of the second transaction ID does not correspond to the paging reader device of the first transaction ID, the circuitry, in operation, performs the access procedure in response to the second paging message.

12. The A-loT device according to any of the claims 1 to 10, wherein, after performing a successful access procedure in response to the second paging message, stores the second transaction ID in the memory.

13. The A-loT device according to any of the claims 1 to 12, wherein in case the memory stores one transaction ID, the storing of the second transaction ID replaces the first transaction ID stored in the memory; and
in case the memory stores two or more transaction IDs, the storing of the second transaction ID replaces a transaction ID, which is the longest time stored among the two or more transaction IDs stored in the memory.

14. A reader device for an ambient Internet of Things, A-loT, device, comprising:
circuitry, which in operation:
obtains an indication of a paging entity;
a transceiver, which in operation:
transmits a paging message to the A-loT device, the paging message including the indication of the paging entity and a transaction identifier, ID.

15. The reader device according to claim 14, wherein the circuitry, in operation, further obtains an indication for a duration of a validity timer of the A-loT device; and
adapts a number and/or a frequency of repetitions of paging messages including a same transaction ID.
